# FASCICULE DE BREVET EUROPEEN

(11) **EP 2 681 992 B1**
(45) Date de publication et mention de la délivrance du brevet: **30.09.2015**
(21) Numéro de dépôt: 12175351.1
(22) Date de dépôt: 06.07.2012
(51) Int. Cl.: A01K 1/01

(54) **Dispositif sanitaire pour animaux domestiques**
Sanitärvorrichtung für Haustiere
Sanitary device for domestic animals

(43) Date de publication de la demande: 08.01.2014
(73) Titulaire: Alternatech, 1300 Limal (BE)
(72) Inventeur: Tilmant, Tanguy, 1300 Limal (BE)
(74) Mandataire: Coulon, Ludivine

(56) Documents cités:
- DE-A1- 19 903 953
- NL-C1- 1 014 979
- US-A- 5 184 574

## Description

La présente invention se rapporte à une zone d'accueil d'un animal domestique (voir aussi DE 19903953 ou NL1014979) agencée pour recevoir ses excrétions et comprenant une conduite d'évacuation animale débouchant dans une conduite d'évacuation humaine placée entre une zone d'accueil d'un être humain, agencée pour recevoir les excrétions de ce dernier, et une canalisation d'évacuation d'eaux-vannes, ladite zone d'accueil d'un animal domestique comprenant en outre un dispositif rotatif obturateur présentant une première position permettant la réception desdites excrétions de l'animal et une deuxième position permettant l'évacuation desdites excrétions de l'animal (voir aussi US5184574).

Un tel dispositif est par exemple connu du document WO2010/146611, lequel décrit un appareil sanitaire combinant une toilette à usage humain à une litière animale. La zone contenant la litière animale est connectée à ladite toilette humaine afin d'assurer l'évacuation des excrétions animales par le biais du système d'évacuation existant de la toilette humaine. Selon un mode de réalisation préféré décrit dans ce document, la litière est contenue dans une zone destinée à accueillir l'animal domestique et qui est connectée à une conduite d'évacuation animale débouchant dans la conduite d'évacuation de la toilette humaine, elle-même connectée à une canalisation d'évacuation d'eaux-vannes.

Malheureusement, un tel dispositif sanitaire requiert l'intervention du propriétaire de l'animal domestique puisqu'une fois que l'animal a effectué ses besoins, il est non seulement nécessaire d'activer manuellement une chasse d'eau pour évacuer la litière souillée mais aussi de remplacer la litière. Par ailleurs, l'activation de la chasse d'eau entraine un rinçage de l'entièreté de la zone d'accueil de l'animal, ce qui n'est pas indiqué en vue de l'apport de litière fraiche et sèche. L'utilisateur doit donc attendre le séchage de la zone d'accueil ou l'essuyer avant d'y placer la nouvelle litière. Un tel dispositif peut en outre s'avérer être peu sécurisant pour l'animal domestique, lequel pourrait par exemple avoir une patte bloquée dans l'ouverture de la conduite d'évacuation animale qui n'est recouverte que par une couche de litière. Si l'animal domestique était confronté à une telle situation, on peut raisonnablement penser qu'il ne serait plus enclin à réutiliser le dispositif sanitaire. Par ailleurs, aucun maintien de la litière dans la zone d'accueil n'est assuré par un tel dispositif, la litière pouvant ainsi s'écouler dans la conduite d'évacuation animale avant même d'avoir été utilisée. Seul un faible diamètre de la conduite d'évacuation animale peut permettre de limiter un écoulement de litière non utilisée vers les conduites d'évacuation et permet de minimiser les risques (dangers) pour l'animal domestique. Cependant, plus le diamètre de la conduite d'évacuation animale est réduit, plus le risque de formation de bouchons dans cette même conduite est élevé. En effet, si la conduite présente un faible diamètre, la litière, généralement commercialisée sous forme de copeaux et rendue collante par les excrétions animales a tendance à coller aux parois des conduites, ce qui provoques des bouchons et, par conséquent, des problèmes d'évacuation non négligeables.

Pour résoudre au moins en partie ces problèmes, il est prévu suivant l'invention, une zone d'accueil d'un animal domestique telle qu'indiquée au début, caractérisée par le fait que ledit dispositif rotatif obturateur est un cylindre muni d'un axe central horizontal parallèle à un plan horizontal, ledit cylindre présentant au moins deux cavités diamétralement opposées sur toute la longueur dudit cylindre dans un repère trigonométrique dont les axes sont superposés aux médianes de la section dudit cylindre prises au milieu, lesdites au moins deux cavités étant agencées pour être remplies de litière et/ou d'excrétions de l'animal, et par le fait qu'une conduite d'arrivée d'eau est connectée à ladite conduite d'évacuation animale.

Une zone d'accueil d'un animal comprenant un tel dispositif obturateur rotatif est sans risque pour l'animal domestique puisque ledit dispositif empêche toute entrée ou contact avec la conduite d'évacuation animale. Ce dispositif obturateur rotatif permet par ailleurs d'utiliser une conduite d'évacuation animale de n'importé quel diamètre puisqu'elle est isolée de ladite zone d'accueil d'un animal. Ceci est particulièrement avantageux pour assurer une évacuation optimale des excrétions qui, plus le diamètre de la conduite d'évacuation animale est élevé, moins elles adhèrent facilement aux parois de cette même conduite. Les problèmes de bouchons susmentionnés peuvent donc être facilement évités. D'autre part, la présence d'un dispositif obturateur rotatif minimise la remontée d'odeurs depuis ladite conduite d'évacuation animale vers ladite zone d'accueil d'un animal, ce qui contribue à une hygiène optimale.

Selon la présente invention, ledit dispositif obturateur rotatif est un cylindre muni d'un axe central horizontal parallèle à un plan horizontal. Ce cylindre présente au moins deux cavités diamétralement opposées et courbes sur toute la longueur dudit cylindre, lesdites cavités étant situées, dans un repère trigonométrique dont les axes sont superposés aux médianes de la section du cylindre prises au milieu, pour l'une entre 315 et 45° et pour l'autre entre 135 et 225°. Selon une position de repos, avant rotation dudit dispositif obturateur rotatif, la cavité comprise entre 315 et 45° s'ouvre sur ladite zone d'accueil d'un animal et peut donc ainsi recevoir les excrétions de l'animal. Une rotation de 180° de ce dispositif obturateur rotatif va entrainer les excrétions vers ladite conduite d'évacuation animale et aboutir à un positionnement de la cavité initialement comprise entre 135 et 225° à une position comprise entre 315 et 45°.

Il est bien entendu que ledit cylindre peut comprendre plus de deux cavités, par exemple trois ou quatre disposées symétriquement par rapport audit repère trigonométrique. Dans ce cas, pour passer de ladite première position agencée pour permettre la réception des excrétions de l'animal à une deuxième position agencée pour permettre l'évacuation des excrétions de l'animal, ledit cylindre doit effectuer une rotation selon un pas égal à 1/n tour où n est égal au nombre de cavités présentes sur le cylindre.

De façon alternative, et ne faisant pas partie de la présente invention, ledit dispositif obturateur rotatif peut être, par exemple, une vanne à tiroirs rotative munie d'un axe central vertical et dont la surface est sensiblement plane et parallèle à un plan horizontal. Ladite vanne à tiroirs rotative comprend un premier et un deuxième tiroirs superposés, chacun desdits tiroirs comprenant n sections alternativement pleines ou creuses, n étant un nombre pair.

Lorsque ladite vanne à tiroirs rotative est en position ouverte, une section creuse dudit premier tiroir est superposée et se trouve en face d'une section creuse dudit deuxième tiroir, ce qui crée une ouverture et permet une mise en communication entre ladite conduite d'évacuation animale et ladite zone d'accueil de l'animal. Ceci permet une évacuation des excrétions de l'animal suite à leur chute sous l'effet de la force de gravité dans ladite conduite d'évacuation animale depuis ladite zone d'accueil de l'animal.

Lorsque ladite vanne à tiroirs rotative est en position fermée, une section creuse dudit premier tiroir est superposée et se trouve en face d'une section pleine dudit deuxième tiroir. Dans ce cas, aucune communication n'est possible entre ladite conduite d'évacuation animale et ladite zone d'accueil de l'animal. Il est bien entendu, de façon équivalente, qu'une section pleine dudit premier tiroir peut être superposée sur une section creuse dudit deuxième tiroir pour obtenir la position fermée de ladite vanne à tiroirs rotative.

Une mise en rotation de ladite vanne à tiroirs rotative permet donc de passer d'une position ouverte à une position fermée et inversement, ceci en superposant deux sections creuses de chacun desdits tiroir ou en superposant une section creuse d'un des deux tiroirs sur une section pleine de l'autre tiroir. Ladite vanne à tiroir rotative doit ainsi effectuer une rotation d'un pas de 1/n tour pour passer de ladite première position agencée pour permettre la réception des excrétions de l'animal à une deuxième position agencée pour permettre l'évacuation des excrétions de l'animal.

La zone d'accueil d'un animal selon l'invention comprend une conduite d'arrivée d'eau connectée à ladite conduite d'évacuation animale. Cette conduite est reliée à un réservoir d'eau libérant un volume prédéterminé d'eau pour effectuer le rinçage de ladite conduite d'évacuation animale. Ladite libération d'un volume prédéterminé d'eau peut, en outre, être réalisée par l'intermédiaire d'une électrovanne connectée directement à une arrivée d'eau et non pas à un réservoir d'eau. Au préalable et suite à la rotation dudit dispositif rotatif obturateur, les excrétions animales auront été évacuées dans ladite conduite d'évacuation animale. Le fait que le rinçage des excrétions s'effectue au niveau de ladite conduite d'évacuation animale est particulièrement avantageux car ce rinçage localisé permet de maintenir ladite zone d'accueil de l'animal sèche et donc prête à être réutilisée directement. Lorsque ledit dispositif obturateur rotatif est un cylindre comprenant au moins deux cavités, le rinçage peut être effectué avec un jet d'eau sous pression qui rince à la fois ladite conduite d'évacuation animale et, par déviation du jet d'eau sous pression sur les parois de ladite conduite d'évacuation animale, ladite cavité située dans ladite conduite d'évacuation animale.

Le dispositif obturateur rotatif est, de préférence, formé dans un matériau non poreux et est monté sur un axe vertical ou horizontal placé dans ladite conduite d'évacuation animale. La rotation de ce dispositif obturateur rotatif permet de passer d'une première position vers une deuxième position et inversement en l'absence de l'animal domestique dans ladite zone d'accueil lui étant destinée.

De préférence, selon l'invention, ladite zone d'accueil de l'animal est connectée à un réservoir de litière muni d'une vanne à dosage volumétrique afin de libérer une quantité prédéterminée de litière dans ladite zone d'accueil de l'animal. De préférence, ladite litière est une litière hydrosoluble à base végétale. Eventuellement, ladite litière peut être guidée par un tuyau ou une rampe pour aboutir au niveau dudit dispositif obturateur rotatif.

Avantageusement, selon la présente invention, ladite zone d'accueil de l'animal est séparée de ladite zone d'accueil d'un être humain par une paroi, par exemple par un mur ou une cloison. De préférence, cette paroi ou cloison est munie d'une ouverture d'introduction de l'animal vers ladite zone d'accueil de l'animal. Cette ouverture peut éventuellement être munie d'un système de fermeture, par exemple d'une porte. De cette façon, la zone d'accueil d'un animal peut être encastrée et isolée de la toilette humaine, ce qui, pour des raisons d'hygiène, est particulièrement indiqué. L'encastrement de ladite zone d'accueil de l'animal et éventuellement du réservoir d'eau et/ou du réservoir de litière permet en outre de minimiser l'espace occupé par le dispositif sanitaire destiné à l'animal, ce qui constitue un avantage considérable dans les espaces restreints tels que les toilettes ou les salles de bain dans une habitation.

Avantageusement, ladite zone d'accueil d'un animal selon la présente invention présente une paroi, de fond inclinée selon un angle α par rapport à un plan horizontal. Cette inclinaison permet de guider la litière alimentée et/ou manipulée par ledit animal domestique vers ledit dispositif rotatif obturateur. Cette inclinaison facilite également le nettoyage manuel de ladite zone d'accueil d'un animal lorsqu'il y a lieu d'effectuer un tel nettoyage.

De façon tout aussi avantageuse selon la présente invention, ladite zone d'accueil d'un animal comprend au moins un détecteur de présence de l'animal (entrée ou sortie de la zone d'accueil d'un animal), par exemple un détecteur volumétrique, un détecteur optique, un détecteur thermique ou tout autre type de détecteur adapté, relié à un système de gestion électronique, lui-même connecté à un tableau de commande accessible pour l'utilisateur. Selon que ledit au moins un détecteur détecte l'entrée et la sortie de l'animal de ladite zone d'accueil d'un animal, un cycle de fonctionnement va être mis en oeuvre comme décrit ci-après.

De préférence et essentiellement si ladite zone d'accueil d'un animal selon l'invention est encastrée, par exemple derrière un mur ou une paroi, une source de lumière peut être prévue pour que l'animal ne se retrouve pas confiné dans un endroit sombre.

Avantageusement, ladite conduite animale est prolongée par un siphon permettant d'éviter la remontée d'odeurs depuis ladite conduite animale et depuis ladite canalisation d'évacuation d'eaux-vannes. La présence d'un siphon est avantageuse puisqu'il permet à la litière de se dissoudre dans sa partie inférieure remplie d'eau avant de passer dans ladite conduite d'évacuation humaine.

De préférence, ladite zone d'accueil d'un animal comprend une trappe de visite pour faciliter son entretien, par exemple pour réaliser un nettoyage manuel de ladite zone d'accueil d'un animal lorsqu'il s'avère nécessaire.

D'autres formes de réalisation de la zone d'accueil d'un animal suivant l'invention sont indiquées dans les revendications annexées.

L'invention a aussi pour objet un procédé de fonctionnement d'un appareil sanitaire d'un animal domestique. Ce procédé comprend les étapes séquentielles de :
- détection de l'entrée d'un animal domestique dans ladite zone d'accueil d'un animal par au moins un détecteur,
- détection de la sortie dudit un animal domestique de ladite zone d'accueil d'un animal par au moins un détecteur,
- mise en rotation dudit dispositif rotatif obturateur selon un pas prédéterminé pour passer d'une première position agencée pour permettre la réception des excrétions de l'animal à une deuxième position agencée pour permettre l'évacuation des excrétions de l'animal.

En conséquence, un tel procédé est totalement automatique, sécurisant pour l'animal et permet une réutilisation rapide de ladite zone d'accueil de l'animal. En effet, la présence d'au moins un détecteur détectant la présence (entrée) ou l'absence (sortie) de l'animal de ladite zone d'accueil permet d'automatiser tout le fonctionnement de l'appareil sanitaire d'un animal domestique. Aucune intervention du propriétaire de l'animal n'est requise, les différentes étapes séquentielles étant contrôlées par un système de gestion électronique.

A tout moment, ladite conduite d'évacuation animale est ainsi isolée de ladite zone d'accueil et l'animal ne peut donc pas y entrer, ne fût-ce même que partiellement. Une mise en rotation dudit dispositif rotatif obturateur, uniquement suite à la détection de la sortie de l'animal de ladite zone d'accueil, renforce la sécurité de l'appareil sanitaire d'un animal domestique selon la présente invention.

Avantageusement, selon la présente invention, le procédé de fonctionnement d'un appareil sanitaire d'un animal domestique comprend en outre une étape supplémentaire de nettoyage de ladite conduite d'évacuation animale par rinçage par un apport d'un volume d'eau prédéterminé depuis ledit réservoir d'eau vers ladite conduite d'évacuation animale. Cette étape additionnelle permet le rinçage de ladite conduite d'évacuation animale où les excrétions animales et/ou la litière souillée sont préalablement tombées suite à une rotation dudit dispositif rotatif obturateur. Il s'agit donc d'un rinçage localisé dans ladite conduite d'évacuation animale permettant de conserver ladite zone d'accueil d'un animal sèche et prête à recevoir à nouveau l'animal. En outre, un tel rinçage permet de réduire la consommation en eau nécessaire à une évacuation optimale des excrétions animales.

De préférence, selon la présente invention, le procédé de fonctionnement d'un appareil sanitaire d'un animal domestique comprend en outre une étape supplémentaire d'apport de litière fraiche et propre depuis un réservoir de litière vers ladite zone d'accueil d'un animal.

D'autres formes de réalisation du procédé de fonctionnement d'un appareil sanitaire d'un animal domestique suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue schématique d'un appareil sanitaire d'un animal domestique ne faisant pas partie de l'invention.
La figure 2 est une vue d'en haut d'un appareil sanitaire d'un animal domestique suivant l'invention selon la ligne de coupe II de la figure 1.
La figure 3 est une vue d'en haut en coupe d'un appareil sanitaire d'un animal domestique suivant l'invention selon la ligne de coupe III de la figure 1.
La figure 4 est une vue en coupe d'un appareil sanitaire d'un animal domestique ne faisant pas partie de l'invention selon la ligne de coupe IV de la figure 1.
Les figures 5a et 5b sont des vues d'en haut en coupe d'un appareil sanitaire d'un animal domestique ne faisant pas partie de l'invention selon la ligne de coupe V de la figure 1.
La figure 6 illustre un appareil sanitaire d'un animal domestique avec un dispositif rotatif obturateur sous forme d'un cylindre présentant plusieurs cavités selon l'invention.

Sur les figures, les éléments identiques ou analogues portent les mêmes références.

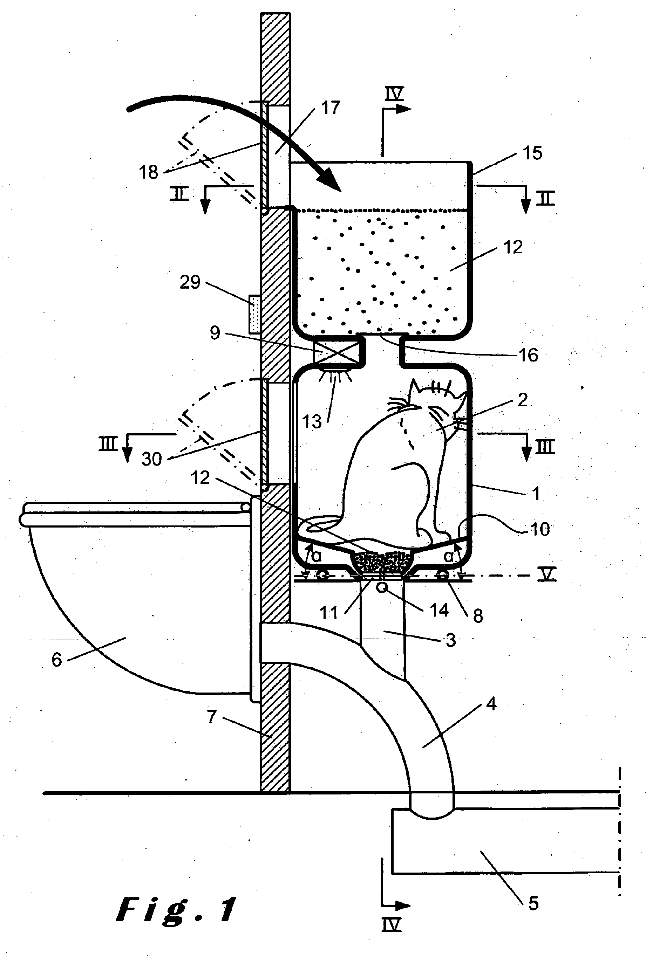

La figure 1 illustre une zone d'accueil (1) d'un animal domestique (2) comprenant une conduite d'évacuation animale (3) débouchant dans une conduite d'évacuation humaine (4), elle-même connectée à une canalisation d'évacuation d'eaux-vannes (5). La conduite d'évacuation humaine (4) relie ladite canalisation d'évacuation d'eaux-vannes (5) à une zone d'accueil d'un être humain (toilette) (6) fixée à une paroi (7).

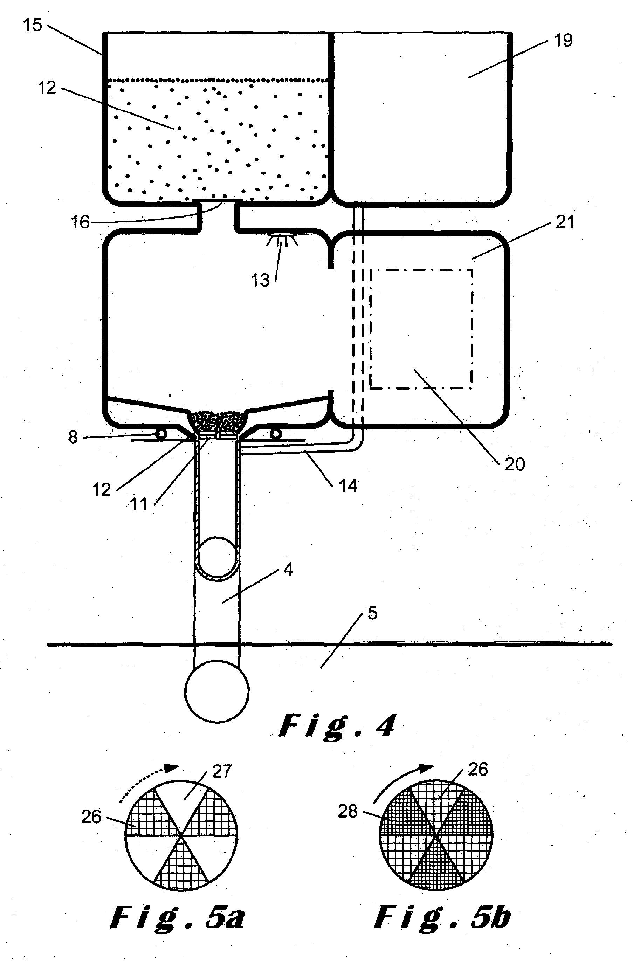

Ladite zone d'accueil (1) d'un animal domestique (2) est munie de détecteurs volumétriques (8) agencés pour détecter la présence (entrée) ou l'absence (sortie) de l'animal (2). Ces détecteurs (8) sont reliés à un système de gestion électronique (9) qui va permettre et générer la mise en oeuvre de cycles de fonctionnement selon les signaux reçus et transmis par lesdits détecteurs (8). Le système de gestion électronique (9) est lui-même connecté à un tableau de commande (29) auquel à accès l'utilisateur. Par ailleurs, ladite zone d'accueil (1) d'un animal domestique (2) présente une paroi de fond (10) inclinée selon un angle α par rapport à un plan horizontal. En outre, ladite zone d'accueil (1) d'un animal domestique (2) comprend un dispositif rotatif obturateur (11) sous forme d'une vanne à tiroirs rotative ne faisant pas partie de l'invention et comprenant un premier et un deuxième tiroirs superposés, chacun desdits tiroirs comprenant 6 sections alternativement pleines (26, 28) ou creuses (27) (comme illustré aux figures 5a et 5b). Ce dispositif rotatif obturateur(11) est agencé pour séparer et isoler ladite zone d'accueil (1) de ladite conduite d'évacuation animale (3). Ce dispositif rotatif obturateur (11) est recouvert par une couche de litière (12) destinée à être utilisée par l'animal (2).

De plus, ladite zone d'accueil (1) est munie d'une trappe de visite (30) permettant son entretien lorsqu'il s'avère nécessaire.

Lorsque l'animal (2) entre dans ladite zone d'accueil (1), sa présence est détectée par les détecteurs volumétriques (8) et une source de lumière (13) est activée pour que l'animal (2) ne se retrouve pas dans l'obscurité lorsqu'il effectue ses besoins.

Lorsque l'animal (2) quitte ladite zone d'accueil (1), sa sortie est détectée par les détecteurs volumétriques (8) qui envoient cette information au système de gestion électronique (9) pour que ladite source de lumière (13) soit éteinte. Une mise en rotation dudit dispositif rotatif obturateur (11) est alors effectuée selon un pas prédéterminé, ladite rotation étant commandée par ledit système de gestion électronique (9). Cette rotation va faire en sorte qu'une section creuse dudit premier tiroir soit superposée et se trouve en face d'une section creuse dudit deuxième tiroir, ce qui crée une ouverture et permet une mise en communication entre ladite conduite d'évacuation animale (3) et ladite zone d'accueil (1) de l'animal (2). Ceci permet une évacuation des excrétions de l'animal suite à leur chute sous l'effet de la force de gravité dans ladite conduite d'évacuation animale (3) depuis ladite zone d'accueil de l'animal (1). Cette mise en rotation entraine l'évacuation de la litière (12) souillée par les excrétions de l'animal (2).

Suite à cette ouverture dudit dispositif rotatif obturateur (11), une nouvelle rotation doit être effectuée pour assurer sa fermeture. Lors de cette nouvelle rotation, une section creuse (27) dudit premier tiroir est superposée et se trouve en face d'une section pleine (26) dudit deuxième tiroir. Dans ce cas, aucune communication n'est possible entre ladite conduite d'évacuation animale (3) et ladite zone d'accueil de l'animal (1). Par ailleurs, lorsque ladite vanne à tiroirs rotative est en position fermée, la section pleine (28) dudit premier tiroir est apparente.

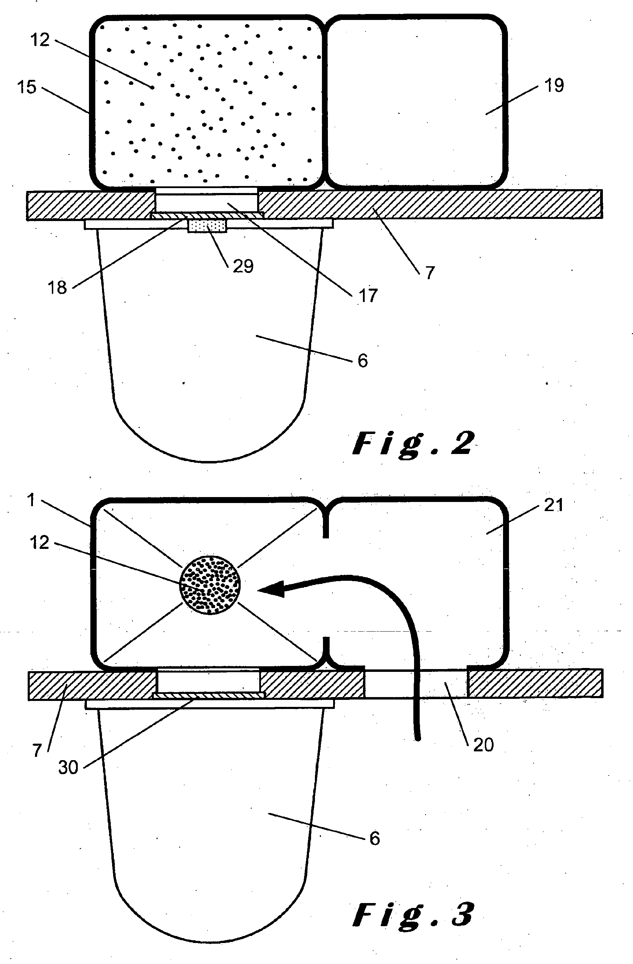

Ensuite, un volume d'eau prédéterminé est injecté dans ladite conduite d'évacuation animale (3) par l'intermédiaire d'une conduite d'arrivée d'eau (14) connectée à un réservoir d'eau (illustré à la figure 2 sous le n°19). Un rinçage de ladite conduite d'évacuation animale (3), où de la litière (12) souillée est tombée par gravité, est ainsi assuré. Ce rinçage est localisé et n'a lieu qu'au niveau de ladite conduite d'évacuation animale (3), ce qui permet de ne pas mouiller ladite zone d'accueil (1) de l'animal (2) puisque ledit dispositif rotatif obturateur (11) isole ladite conduite d'évacuation animale (3) de ladite zone d'accueil (1) de l'animal (2).

Finalement, de la litière fraiche (12) est amenée dans ladite zone d'accueil (1) de l'animal (2) par libération au départ d'un réservoir de litière (15) muni d'une vanne à dosage volumétrique (16) commandée par ledit système de gestion électronique (9). La litière (12) tombe donc par gravité suite à l'ouverture de ladite vanne à dosage volumétrique (16) qui est refermée lorsqu'un volume prédéterminé de litière (12) a été libéré dans ladite zone d'accueil (1) de l'animal (2). Ledit réservoir de litière (15) peut être rempli (comme indiqué par la flèche) via une ouverture (17) pratiquée dans ladite paroi (7) et munie d'une porte (18).

A la figure 2, qui est une vue d'en haut (selon l'axe II) à la figure 1, un réservoir d'eau (19) est placé à côté du réservoir de litière (15). Ce réservoir d'eau (19) est connecté, par l'intermédiaire d'une conduite d'arrivée d'eau (14) (illustrée aux figures 1 et 4) à la conduite d'évacuation animale (3).

A la figure 3, qui est une vue d'en haut en coupe (selon l'axe III) à la figure 1, une ouverture d'introduction (20) de l'animal (2) est illustrée. Cette ouverture d'introduction (20) est aménagée dans la paroi (7) et donne accès à l'animal (2) à un sas (21) ouvert vers ladite zone d'accueil (1). Eventuellement, ladite ouverture d'introduction (20) est munie d'une porte (non illustrée).

A la figure 4, qui est une coupe selon l'axe IV à la figure 1, l'ensemble des éléments décrits aux figures 1 à 3 sont illustrés.

Aux figures 5a et 5b, qui sont des vues d'en haut en coupe (selon l'axe V) à la figure 1, le dispositif rotatif obturateur sous forme d'une vanne à tiroirs rotative est illustré en position ouverte (a) et en position fermée (b).

Lorsque ladite vanne à tiroirs rotative est en position ouverte (figure 5a), une section creuse (27) dudit premier tiroir est superposée et se trouve en face d'une section creuse dudit deuxième tiroir, ce qui crée une ouverture et permet une mise en communication entre ladite conduite d'évacuation animale (3) et ladite zone d'accueil de l'animal (1). Ceci permet une évacuation des excrétions de l'animal suite à leur chute sous l'effet de la force de gravité dans ladite conduite d'évacuation animale (3) depuis ladite zone d'accueil de l'animal (1).

Lorsque ladite vanne à tiroirs rotative est en position fermée (figure 5b), une section creuse (27) dudit premier tiroir est superposée et se trouve en face d'une section pleine (26) dudit deuxième tiroir. Par ailleurs, lorsque ladite vanne à tiroirs rotative est en position fermée, la section pleine (28) dudit premier tiroir est apparente. Dans ce cas, aucune communication n'est possible entre ladite conduite d'évacuation animale (3) et ladite zone d'accueil de l'animal (1).

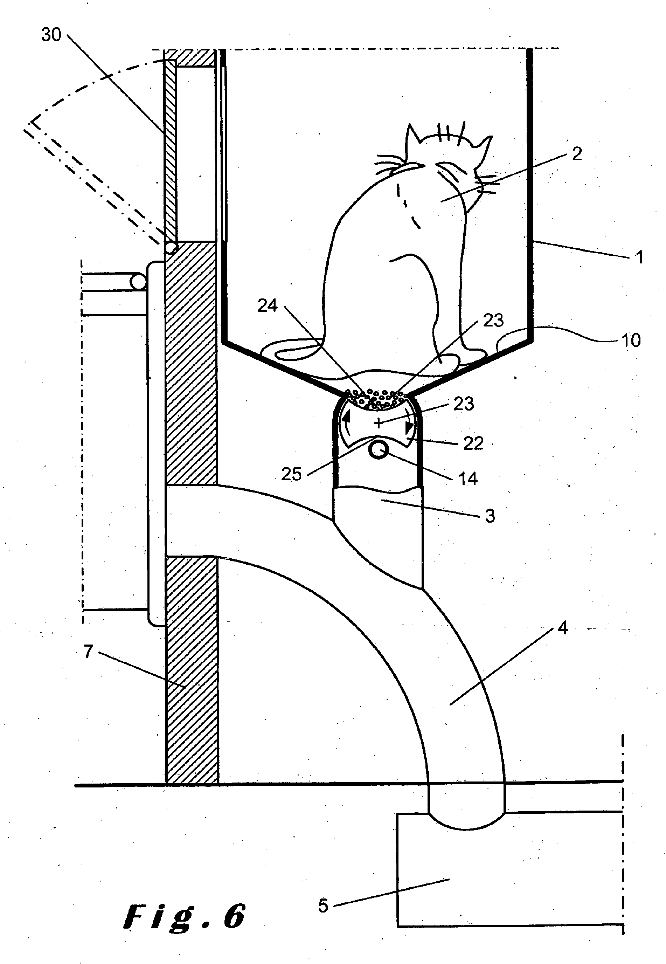

La figure 6 illustre un appareil sanitaire d'un animal domestique avec un dispositif rotatif obturateur selon l'invention constitué d'un cylindre rotatif (22) comprenant un axe central horizontal (23) et étant placé dans ladite conduite d'évacuation animale (3). Ledit cylindre rotatif (22) est muni d'une première cavité (24) et d'une deuxième cavité (25) diamétralement opposées, ladite première cavité (24) s'ouvrant vers ladite zone d'accueil (1) de l'animal (2) et étant remplie de litière (12) et/ou d'excrétions de l'animal (2). Une rotation de 180° dudit cylindre rotatif (22), selon le sens indiqué par les flèches, entraine ladite première cavité (24) et ainsi ladite litière (12) et/ou lesdites excrétions de l'animal (2) vers ladite conduite d'évacuation animale (3) où ladite litière (12) et/ou lesdites excrétions de l'animal (2) vont tomber par gravité. Dans un même temps, lors de ladite rotation de 180°, ladite deuxième cavité (25) va se positionne de telle façon à faire face à ladite zone d'accueil (1) de l'animal (2). Cet appareil sanitaire présente un fonctionnement identique des autres éléments (détecteurs, réservoir d'eau, réservoir de litière, ...) tel que décrit plus haut à la description de la figure 1.

Il est bien entendu que la présente invention n'est en aucune façon limitée aux formes de réalisations décrites ci-dessus et que bien des modifications peuvent y être apportées sans sortir du cadre des revendications annexées.

Par exemple, on peut prévoir un accès direct de l'animal dans ladite zone d'accueil sans qu'une entrée par un sas ne soit nécessaire. Dans ce cas, ladite zone d'accueil peut être munie ou non d'un système de fermeture, par exemple d'une porte.

## Revendications

1. Zone d'accueil d'un animal domestique (1) agencée pour recevoir ses excrétions et comprenant une conduite d'évacuation animale (3) débouchant dans une conduite d'évacuation humaine (4) placée entre une zone d'accueil d'un être humain (6), agencée pour recevoir les excrétions de ce dernier, et une canalisation d'évacuation d'eaux-vannes (5), ladite zone d'accueil d'un animal domestique (1) comprenant en outre un dispositif rotatif obturateur (22) présentant une première position permettant la réception desdites excrétions de l'animal et une deuxième position permettant l'évacuation desdites excrétions de l'animal, **caractérisée par le fait que** ledit dispositif rotatif obturateur (22) est un cylindre muni d'un axe central horizontal parallèle à un plan horizontal, ledit cylindre présentant au moins deux cavités diamétralement opposées sur toute la longueur dudit cylindre dans un repère trigonométrique dont les axes sont superposés aux médianes de la section dudit cylindre prises au milieu, lesdites au moins deux cavités étant agencées pour être remplies de litière et/ou d'excrétions de l'animal, et **par le fait qu'**une conduite d'arrivée d'eau (14) est connectée à ladite conduite d'évacuation animale (3).

2. Zone d'accueil d'un animal domestique (1) selon la revendication 1, **caractérisée par le fait qu'**elle est connectée à un réservoir de litière (15) étant muni d'une vanne à dosage volumétrique (16) et étant agencé pour libérer une quantité de litière (12) prédéterminée, ledit réservoir de litière (15) présentant une première position ouverte et une deuxième position fermée.

3. Zone d'accueil d'un animal domestique selon les revendications 1 ou 2, **caractérisée par le fait qu'**elle est séparée de ladite zone d'accueil d'un être humain (6) par une paroi (7).

4. Zone d'accueil d'un animal domestique selon la revendication 3, **caractérisée par le fait qu'**elle comprend une ouverture d'introduction (20) de l'animal ménagée dans ladite paroi (7).

5. Zone d'accueil d'un animal domestique selon l'une quelconque des revendications 1 à 4, **caractérisée par le fait qu'**elle présente une paroi de fond inclinée (10) selon un angle α par rapport à un plan horizontal passant par le sommet de ladite au moins une conduite d'évacuation animale (3).

6. Zone d'accueil d'un animal domestique selon l'une quelconque des revendications 1 à 5, **caractérisée par le fait qu'**elle comprend au moins un détecteur de la présence (8) de l'animal relié à un système de gestion électronique (9).

7. Zone d'accueil d'un animal domestique selon l'une quelconque des revendications 1 à 6, **caractérisée par le fait qu'**elle comprend une source de lumière (13).

8. Zone d'accueil d'un animal domestique selon l'une quelconque des revendications 1 à 7, **caractérisée par le fait que** ladite conduite animale (3) est prolongée par un siphon.

9. Zone d'accueil d'un animal domestique selon l'une quelconque des revendications 1 à 8, **caractérisée par le fait qu'**elle comprend une trappe de visite (30).

10. Procédé de fonctionnement d'un appareil sanitaire selon l'une quelconque des revendications 1 à 9, d'un animal domestique comprenant les étapes de :
- détection de l'entrée d'un animal domestique dans ladite zone d'accueil (1) d'un animal par au moins un détecteur (8),
- détection de la sortie dudit un animal domestique de ladite zone d'accueil (1) d'un animal par au moins un détecteur (8),
- mise en rotation dudit dispositif rotatif obturateur (22) selon un pas prédéterminé pour passer d'une première position agencée pour permettre la réception des excrétions de l'animal à une deuxième position agencée pour permettre l'évacuation des excrétions de l'animal,

11. Procédé de fonctionnement d'un appareil sanitaire d'un animal domestique selon la revendication 10, comprenant en outre le nettoyage de ladite conduite d'évacuation animale (3) par rinçage par un apport d'un volume prédéterminé d'eau depuis un réservoir d'eau (19) vers ladite conduite d'évacuation animale (3).

12. Procédé de fonctionnement d'un appareil sanitaire d'un animal domestique selon les revendications 10 ou 11, comprenant en outre un apport de litière (12) propre depuis un réservoir de litière (15) vers ladite zone d'accueil (1), ledit réservoir de litière (15) étant muni d'une vanne à dosage volumétrique (16) et présentant une première position ouverte et une deuxième position fermée.

## Patentansprüche

1. Verrichtungsbereich eines Haustiers (1), der derart angeordnet ist, dass seine Ausscheidungen aufgenommen werden, und umfassend eine Abflussleitung für das Tier (3), die in eine Abflussleitung für den Menschen (4) mündet, die zwischen einem Verrichtungsbereich eines Menschen (6), der derart angeordnet ist, dass er die Ausscheidungen dieses letztgenannten aufnimmt, und einem Schmutzwasserableitungskanal (5) angeordnet ist, wobei der Verrichtungsbereich eines Haustiers (1) ferner eine drehbare Verschlussvorrichtung (22) umfasst, die eine erste Position, die die Aufnahme der Ausscheidungen des Tiers ermöglicht, und eine zweite Position aufweist, die die Beseitigung der Ausscheidungen des Tiers ermöglicht, **dadurch gekennzeichnet, dass** die drehbare Verschlussvorrichtung (22) ein Zylinder ist, der mit einer horizontalen Zentralachse parallel zu einer Horizontalebene versehen ist, wobei der Zylinder mindestens zwei diametral entgegengesetzt liegende Hohlräume auf der gesamten Länge des Zylinders in einem trigonometrischen Bezugspunkt aufweist, dessen Achsen über den Mittellinien des Querschnitts des Zylinders in der Mitte gesehen angeordnet sind, wobei die mindestens zwei Hohlräume derart angeordnet sind, dass sie mit Streu und/oder Ausscheidungen des Tiers gefüllt werden, und dadurch, dass eine Wasserzuleitung (14) an die Abflussleitung (3) für das Tier angeschlossen ist.

2. Verrichtungsbereich für ein Haustier (1) nach Anspruch 1, **dadurch gekennzeichnet, dass** er an einen Streubehälter (15) angeschlossen ist, der mit einem Ventil zur Volumendosierung (16) versehen und derart angeordnet ist, dass er eine vorbestimmte Menge an Streu (12) freisetzt, wobei der Streubehälter (15) eine erste offene Position und eine zweite geschlossene Position aufweist.

3. Verrichtungsbereich für ein Haustier nach den Ansprüchen 1 oder 2, **dadurch gekennzeichnet, dass** er vom Verrichtungsbereich eines Menschen (6) durch eine Wand (7) getrennt ist.

4. Verrichtungsbereich für ein Haustier nach Anspruch 3, **dadurch gekennzeichnet, dass** er eine Eingangsöffnung (20) für das Tier umfasst, die in der Wand (7) ausgenommen ist.

5. Verrichtungsbereich für ein Haustier nach einem der Ansprüche 1 bis 4, **dadurch gekennzeichnet, dass** er eine Bodenwand (10) aufweist, die in einem Winkel α in Bezug zur Horizontalen geneigt ist, verlaufend durch die Spitze der mindestens einen Abflussleitung für das Tier (3).

6. Verrichtungsbereich für ein Haustier nach einem der Ansprüche 1 bis 5, **dadurch gekennzeichnet, dass** er mindestens einen Anwesenheitsdetektor (8) des Tiers umfasst, der mit einem elektronischen Steuersystem (9) verbunden ist.

7. Verrichtungsbereich für ein Haustier nach einem der Ansprüche 1 bis 6, **dadurch gekennzeichnet, dass** er eine Lichtquelle (13) umfasst.

8. Verrichtungsbereich eines Haustiers nach einem der Ansprüche 1 bis 7, **dadurch gekennzeichnet, dass** die Tierleitung (3) durch einen Siphon verlängert ist.

9. Verrichtungsbereich eines Haustiers nach einem der Ansprüche 1 bis 8, **dadurch gekennzeichnet, dass** er eine Eingangsklappe (30) umfasst.

10. Funktionsverfahren eines Sanitärgeräts nach einem der Ansprüche 1 bis 9 für ein Haustier, umfassend die folgenden Schritte:
- Erfassung des Eintritts eines Haustiers in den Verrichtungsbereich (1) für ein Haustier durch mindestens einen Detektor (8),
- Erfassung des Austritts des Haustiers aus dem Verrichtungsbereich (1) für ein Haustier durch mindestens einen Detektor (8),
- Versetzen der drehbaren Verschlussvorrichtung (22) in Drehung mit einer vorbestimmten Geschwindigkeit, um von einer ersten Position, die derart vorgesehen ist, dass sie die Aufnahme der Ausscheidungen des Tiers ermöglicht, in eine zweite Position überzugehen, die derart vorgesehen ist, dass sie die Beseitigung der Ausscheidungen des Tiers ermöglicht.

11. Funktionsverfahren eines Sanitärgeräts für ein Haustier nach Anspruch 10, umfassend ferner die Reinigung der Abflussleitung für das Tier (3) durch Spülen durch Zuleitung eines vorbestimmten Wasservolumens von einem Wasserbehälter (19) zu der Abflussleitung für das Tier (3).

12. Funktionsverfahren eines Sanitärgeräts für ein Haustier nach den Ansprüchen 10 oder 11, umfassend ferner eine Zuleitung von sauberem Streu (12) von einem Streubehälter (15) zu dem Verrichtungsbereich (1), wobei der Streubehälter (15) mit einem Ventil zur Volumendosierung (16) versehen ist, das eine erste offene Position und eine zweite geschlossene Position aufweist.

## Claims

1. An area for accommodating a domestic animal (1), arranged to receive the excretions thereof and comprising an animal discharge-pipe (3) leading to a human discharge-pipe (4) placed between an area (6) for accommodating humans, which is arranged to receive the excretions of the latter, and a sewage-discharge pipeline (5), said area (1) for accommodating a domestic anima! further including a rotatable sealing device (22) having a first position for enabling said animal excretions to be received, and a second position for enabling said animal excretions to be discharged, **characterized in that** said rotatable sealing device (22) is a cylinder provided with a horizontal central axis parallel to a horizontal plane, said cylinder having at least two cavities that are diametrically opposite one another over the entire length of said cylinder in a trigonometric reference whereof the axes are superimposed on the medians of the section of said cylinder taken in the middle, said at least two cavities being arranged to be filled with litter and/or animal excretions, and **in that** a water intake pipe (14) is connected to said animal discharge pipe (3).

2. The area for accommodating a domestic animal (1) according to claim 1, **characterized in that** it is connected to a litter reservoir (15) provided with a volumetric dosing valve (16) and arranged to release a predetermined quantity of litter (12), said litter reservoir (15) having a first open position and a second closed position.

3. The area for accommodating a domestic animal according to claims 1 or 2, **characterized in that** it is separated from said area for accommodating humans (6) by a wall (7).

4. The area for accommodating a domestic animal according to claim 3, **characterized in that** it comprises an insertion opening (20) for the animal arranged in said wall (7).

5. The area for accommodating a domestic animal according to any one of claims 1 to 4, **characterized in that** it has an inclined bottom wall (10) inclined by an angle α relative to a horizontal plane passing through the apex of said at least one animal discharge-pipe (3).

6. The area for accommodating a domestic animal according to any one of claims 1 to 5, **characterized in that** it comprises at least one sensor detecting the presence (8) of the animal connected to an electronic management system (9).

7. The area for accommodating a domestic animal according to any one of claims 1 to 6, **characterized in that** it comprises a light source (13).

8. The area for accommodating a domestic animal according to any one of claims 1 to 7, **characterized in that** said anima! pipe (3) is extended by a trap.

9. The area for accommodating a domestic animal according to any one of claims 1 to 8, **characterized in that** it comprises an access cover (30).

10. An operating method for a sanitary device according to any one of claims 1 to 9, for a domestic animal, comprising the following steps:
- detection by a sensor (8) that a domestic animal has entered said area (1) for accommodating an animal,
- detection by a sensor (8) that a domestic animal has left said area (1) for accommodating an animal,
- rotation of said rotatable sealing device (22) by a predetermined pitch to go from a first position arranged to allow excretions of the animal to be received to a second position arranged to allow the animal's excretions to be discharged.

11. The operating method for a sanitary device for a domestic animal according to claim 10, further comprising cleaning said animal discharge-pipe (3) by rinsing by supplying a predetermined volume of water from a water reservoir (19) toward said animal discharge-pipe (3).

12. The operating method for a sanitary device for a domestic animal according to claims 10 or 11, further comprising supplying clean litter (12) from a litter reservoir (15) toward said accommodation area (1), said litter reservoir (15) being provided with a volumetric dosing valve (16) and having a first open position and a second closed position.
